# EUROPÄISCHE PATENTSCHRIFT

(11) **EP 1 554 839 B1**
(45) Veröffentlichungstag und Bekanntmachung des Hinweises auf die Patenterteilung: **12.09.2007**
(21) Anmeldenummer: 03779810.5
(22) Anmeldetag: 22.10.2003
(51) Int. Cl.: H04L 12/413

(54) **VERFAHREN UND KNOTEN ZUR PARALLELEN NUTZUNG EINES KOMMUNIKATIONSNETZWERKES FÜR ECHTZEITANWENDUNGEN UND NICHT-ECHTZEITANWENDUNGEN**
METHOD AND NODE FOR USING IN PARALLEL A COMMUNICATION NETWORK FOR REAL-TIME APPLICATIONS AND NON REAL-TIME APPLICATIONS
PROCEDE ET NOEUD POUR UTILISER EN PARALLELE UN RESEAU DE COMMUNICATION POUR DES APPLICATIONS TEMPS REEL ET DES APPLICATIONS NON TEMPS REEL

(30) Priorität: 25.10.2002 DE 10249851
(43) Veröffentlichungstag der Anmeldung: 20.07.2005
(73) Patentinhaber: Beckhoff Automation GmbH, 33415 Verl (DE)
(72) Erfinder: JANSSEN, Dirk, 33415 Verl (DE); BECKHOFF, Hans, 33415 Verl (DE)
(74) Vertreter: Wilhelm, Jürgen
(86) Internationale Anmeldenummer: PCT/EP2003/011705
(87) Internationale Veröffentlichungsnummer: WO 2004/039012

(56) Entgegenhaltungen:
- EP-A- 1 111 846
- WO-A-00/03521
- US-A- 5 430 843
- US-A- 5 654 969
- SHARROCK S M ET AL: "A CSMA/CD-BASED, INTEGRATED VOICE/DATA PROTOCOL WITH DYNAMIC CHANNEL ALLOCATION" COMPUTER NETWORKS AND ISDN SYSTEMS, NORTH HOLLAND PUBLISHING. AMSTERDAM, NL, Bd. 18, Nr. 1, 24. November 1989 (1989-11-24), Seiten 1-18, XP000070488 ISSN: 0169-7552
- BERTOLUZZO M ET AL: "Ethernet networks for factory automation" PROCEEDINGS OF THE 2002 IEEE INTERNATIONAL SYMPOSIUM ON INDUSTRIAL ELECTRONICS, Bd. 1, 8. Juli 2002 (2002-07-08), Seiten 175-180, XP010598166
- DEMARTINI C ET AL: "Real-time communication in the factory automation" SIGNAL PROCESSING AND SYSTEMS CONTROL, INTELLIGENT SENSORS AND INSTRUMENTATION. SAN DIEGO, NOV. 9 - 13, 1992, PROCEEDINGS OF THE INTERNATIONAL CONFERENCE ON INDUSTRIAL ELECTRONICS,CONTROL, INSTRUMENTATION AND AUTOMATION (IECON), NEW YORK, IEEE, US, Bd. 3 CONF. 18, 9. November 1992 (1992-11-09), Seiten 772-777, XP010060623 ISBN: 0-7803-0582-5

## Beschreibung

Das Ethernet ist die am weitesten verbreitete Technologie, mit der in lokalen Kommunikationsnetzen, sog. Local Area Networks (LAN), Daten aktuell mit einer Geschwindigkeit bis zu 100 Mio. Bits/sec. (Mbps) übertragen werden können. LANs sind lokale Kommunikationsnetzwerke, die auf ein geografisches Gebiet begrenzt sind und sich aus einem oder mehreren Servern und Arbeitsstationen, sog. Knoten zusammensetzen, die über ein Kommunikationsleitungsnetz, z.B. ein Koaxial-, Glasfaser- oder Twisted Pair-Kabel verbunden sind. Bei LANs sind verschiedenste Netzwerktopologien möglich, wobei die bekanntesten die Bus-, Ring-, Stern- oder Baumstrukturen sind.

LANs werden mit einem Netzwerk-Betriebssystem und einem einheitlichen Netzwerk-Protokoll betrieben. Das Ethernet stellt ein mögliches Netzwerkprotokoll dar und unterstützt dabei die unterschiedlichsten Kommunikationsprotokolle, z.B. das TCP/IP-Protokoll oder das IPX-Protokoll. Im OSI-Schichtenmodell, dem internationalen Referenzmodell für Datenübertragung in Netzwerken, das aus einem Schichtenstapel aus sieben Schichten aufgebaut ist, wobei für jede Schicht eine Menge von Protokollen definiert ist, die jeweils der nächst höheren Schicht ihre Dienste zur Verfügung stellen, ist das Ethernet der zweiten Schicht, der sog. Leitungsschicht zugeordnet. In dieser Leitungsschicht werden die zu übermittelnden Daten zu Paketen gebündelt, denen spezifische Informationen für das jeweilige Kommunikationsprotokoll hinzugefügt werden. Die Leitungsschicht ist im Netzwerk für den Transport der Datenpakete von Knoten zu Knoten und für die Fehlererkennung zuständig. Beim Ethernet-Konzept ist die Leitungsschicht in zwei Ebenen unterteilt, wobei die erste Ebene den Daten einen Kopfabschnitt, einen sog. Header hinzufügen, der Informationen enthält, die für eine korrekte Datenübertragung vom Empfängerprotokoll benötigt werden. In der zweiten Ebene des Ethernetprotokolls wird dann das Datenpaket mithilfe eines zusätzlichen Headers und eines weiteren Endabschnitts, eines sog. Trailers, für den Transport der Datenpakete von Knoten zu Knoten eingekapselt. Mit solchen Ethernet-Datenpaketen, den sog. Ethernet-Telegramme, lassen sich Daten mit einer Länge von bis zu 1500 Bytes übertragen.

Ethernet-Protokolle werden vornehmlich bei Bürokommunikationsnetzwerken eingesetzt. Aufgrund der Vorteile des EthernetKonzepts bei der Nutzung von Standard-Hard- und -softwarekomponenten sowie der Möglichkeit, bei einfacher Vernetzungstechnologie hohe Datenübertragungsraten zu erreichen, besteht der Wunsch, die Ethernet-Netzwerkkommunikation auch in der industriellen Fertigung zum Datenaustausch zwischen Arbeitsstationen einzusetzen. Insbesondere die mangelhafte Echtzeitfähigkeit des Ethernet-Netzprotokolls lässt jedoch nur einen begrenzten Einsatz in der Automatisierungstechnik zu. Bei der Steuerung von Maschinen ist es nämlich erforderlich, dass eine zyklische Bearbeitung der Steuerungsaufgabe ohne zeitliche Schwankungen, d.h. mit nur geringen Abweichungen von der gewünschten Zykluszeit im Bereich weniger Mikrosekunden erfolgt, wobei mit einer vorhersehbaren Antwortzeit auf die Regelanforderung reagiert wird.

Echtzeitfähigkeit und schnelle Reaktionszeit, wie sie in der Automatisierungstechnik gefordert werden, haben bei Standard-Datenverarbeitungsanwendungen, bei denen Ethernet-Kommunikation üblicherweise eingesetzt wird, jedoch nur eine untergeordnete Bedeutung. Zwar sind bereits bei der Video- und Audio-Datenübertragung Ethernet-Kommunikationsverfahren zur Echtzeitübertragung solcher Daten bekannt. Die Anforderung an die Reaktionszeiten sind jedoch bei solchen Anwendungen nicht sehr zeitkritisch, da mit entsprechenden Datenpuffern in der Arbeitsstation kleine Schwankungen ohne weiteres ausgeglichen werden können. Auch in der bidirektionalen Datenübertragung mittels Ethernet, z.B. bei der Internet-Telefonie oder Online-Gaming spielen die Echtzeitfähigkeit und die Reaktionszeit eine gewisse Rolle.

Um die vorstehenden Anwendungen im Rahmen der Ethernet-Kommunikation möglich zu machen, sind Verfahren zur Priorisierung einzelner Ethernet-Frames entwickelt worden. Hierbei werden vor allem zwei Verfahren eingesetzt. Um eine gewisse Echtzeitfähigkeit mit kurzen Reaktionszeiten zu erreichen, werden die zu versendenden Ethernet-Datentelegramme in verschiedene Prioritätskategorien eingeteilt, wobei zuerst die Datenpakete mit der höchsten Priorität versendet werden. Alternativ werden Verfahren eingesetzt, in denen die Priorität der Daten als zusätzliche Information dem Ethernet-Datenpaket selbst hinzugefügt sind. Nachfolgende Knoten im Netzwerk können anhand dieser zusätzlichen Informationen dann die mit höherer Priorität versehenen Datenpakete ermitteln und diese entsprechend bevorzugt bearbeiten.

Diese beiden vorstehenden Ethernet-Verfahren werden jedoch den hohen Anforderungen bezüglich der Echtzeitfähigkeit, d.h. der synchronen Bearbeitung der Daten mit ihrer Entstehung ohne wahrnehmbare Verzögerung sowie der erforderlichen Reaktionszeiten in der Automatisierungstechnik nicht gerecht. Insbesondere besteht das Problem, dass selbst bei eine optimalen Zuordnung von Prioritäten zu den Ethernet-Datenpaketen ein gerade abgeschicktes niedrig priorisiertes Ethernet-Telegramm auch dann vollständig versendet wird, wenn gleichzeitig ein neues höher priorisiertes Datenpaket hinzukommt. Das neu hinzukommende, hoch priorisierte Datenpaket wird dann um die Sendezeit des nieder priorisierten Datenpakets, also bis zu einer Datenlänge eines Ethernet-Datenpaketes von ca. 1.500 Bytes verzögert. Dies kann zu einer zeitlichen Verzögerung bei Steuerungsaufgaben von bis zu ca. 150 µs führen, so dass harte Echtzeit-Steuerungsanwendungen mit Zykluszeiten um die 50 µs und zulässigen Abweichungen von dieser Zykluszeit von maximal 10 µs nicht erfüllt werden können.

Aufgabe der Erfindung ist es, ein Verfahren zum Betreiben eines lokalen Kommunikationsnetzes und einen Knoten an einem solchem lokalen Kommunikationsnetz bereit zu stellen, mit denen sich auf einfache Weise parallel Echtzeitanwendungen und Nicht-Echtzeitanwendungen ausführen lassen.

Gemäß der WO 00/03521 ist eine Echtzeitimplementierung in einem Ethernet bekannt, bei der der Controller gewährleistet, dass zuerst Real-Time Daten und dann nicht Real-Time Daten übertragen werden. SHARROCK S M ET AL:"A CSMA/CD-BASED, INTEGRATED VOICE/DATA PROTOCOL WITH DYNAMIC CHANNEL ALLOCATION", COMPUTER NETWORKS AND ISDN SYSTEMS, NORTH HOLLAND PUBLISHING. AMSTERDAM, NL, Bd. 18, Nr. 1, 24. November 1998, Seiten 1-18, beschreibt eine Datenübermittlung, bei der in einer Ethernetanwendung zwischen Sprachdaten und normalen Daten getrennt wird, wobei die Sprachdaten priorisiert behandelt werden. Aus der US-45,654,969 ist die Möglichkeit bekannt, einen Übermittlungszyklus so auszulegen, dass zwischen zwei Datenarten unterschieden wird, wobei die eine Datenart priorisiert übertragen wird. Die EP-A-1 111 846 beschreibt ein Real-Time System, bei dem in einem Übertragungszyklus zuerst die Real-Time Daten und dann die weiteren Daten übertragen werden.

Diese Aufgabe wird mit einem Verfahren gemäß Anspruch 1 und einem Knoten gemäß Anspruch 7 gelöst. Bevorzugte Weiterbildungen sind in den abhängigen Ansprüchen angegeben.

Gemäß der Erfindung wird in einem Kommunikationsnetz mit mehreren Knoten, die über einen Kommunikationsweg miteinander verbunden sind, eine Datenübermittlung zyklisch und deterministisch ausgeführt, wobei Daten für Echtzeitanwendungen priorisiert behandelt werden, so dass in einem Übertragungszyklus zuerst alle Daten für Echtzeitanwendungen übergeben werden und in der Zeit, die bis zum nächsten Übermittlungszyklus verbleibt, dann die Daten für Nicht-Echtzeitanwendungen.

Das erfindungsgemäße Datenübertragungsverfahren für ein lokales Kommunikationsnetz ermöglicht die parallele Nutzung des Kommunikationsnetzes für Echtzeitanwendungen und Nicht-Echtzeitanwendungen. Insbesondere wird gewährleistet, dass das erfindungsgemäßen Protokoll für lokale Kommunikationsnetze, das die Leitungsschicht im OSI-Modell darstellt, auch den hohen Anforderungen an die Echtzeitfähigkeit und Reaktionszeit für Maschinensteuerungsaufgaben genügt. Um die Kommunikationsanforderungen eines Echtzeitsystems zu erfüllen, erfolgt die Datenübermittlung unter der vollständigen Kontrolle des Echtzeitsystems, wobei die Echtzeitdatenkommunikation gegenüber der sonstigen Datenkommunikation, z.B. zur Administrierung und Fehlerdiagnose, die vom Betriebssystem des Knotens initiiert wird, priorisiert ist. Alle Daten für Nicht-Echtzeitanwendungen werden nämlich grundsätzlich als nieder priorisiert behandelt und erst dann übermittelt, wenn die Datenübermittlung für Echtzeitdatenpakete bereits abgeschlossen ist. Mithilfe der erfindungsgemäßen Priorisierungstechnik für Echtzeitdaten bei gleichzeitiger Ausführung einer zyklischen und deterministischen Datenübermittlung wird dafür gesorgt, dass nicht echtzeitfähige Zugriffe grundsätzlich erst nach den echtzeitfähigen Zugriffen erfolgen und damit den Echtzeitdatenverkehr nicht behindern.

Gemäß einer bevorzugten Ausführungsform wird ein Sendevorgang so ausgeführt, dass bei einem Sendezyklus die Daten für Echtzeitanwendungen erst vollständig gesendet und dann die Zeit berechnet wird, die noch bis zum nächsten Sendezyklus verbleibt, um dann die verbleibende Zeit zur Datenübertragung für Nicht-Echtzeitanwendungen zu verwenden. Es wird so sicher gestellt, dass Datenpakete aus dem Echtzeitsystem immer eine freie Sendeleitungen vorfinden, wenn sie an der Reihe sind. Datenpakete für Nicht-Echtzeitanwendungen, z.B. des Betriebssystems, werden erst danach in den Lücken zwischen zwei Sendezyklen verschickt, wenn entsprechende Zeit verbleibt. Bevorzugt ist dabei, die Daten in Form von Datenpaketen so zu übermitteln, dass dann, wenn die nach dem Senden der Daten für Echtzeitanwendungen verbleibende Zeit die zum Versenden eines Datenpakets für Nicht-Echtzeitanwendungen benötigte Zeitdauer übersteigt, das entsprechende Datenpaket zwischengespeichert und bevorzugt mit dem nächsten Sendezyklus versandt wird. Diese Vorgehensweise ermöglicht eine einfache Prioritätssteuerung des Sendebetriebs von Echtzeitanwendungen und Nicht-Echtzeitanwendungen.

Gemäß einer weiteren bevorzugten Ausführungsform werden bei einem Empfangsvorgang die in einem Empfangszyklus empfangenen Daten ausgewertet, um zu bestimmen, welche der empfangenen Daten Daten für Echtzeitanwendungen und welche der empfangenen Daten Daten für Nicht-Echtzeitanwendungen darstellen, wobei die empfangenen Daten für Echtzeitanwendungen im darauffolgenden Empfangszyklus bearbeitet werden. Diese Vorgehensweise ermöglicht es, auf einfache Weise alle echtzeitrelevanten Datenpakete herauszufiltern, ohne dass es darauf ankommt, wann bzw. in welcher Reihenfolge sie eintreffen. So wird sichergestellt, dass die echtzeitrelevanten Informationen komplett vor Beginn des nächsten Empfangszyklus vollständig für die auszuführenden Echtzeitanwendungen bereit stehen.

Bevorzugt ist dabei weiterhin, die herausgefilterten empfangenen Daten für Nicht-Echtzeitanwendungen in einem von den Echtzeitanwendungen unabhängigen Vorgang zu bearbeiten. Die Übergabe der Datenpakete mit nicht echtzeitrelevanten Daten außerhalb des Echtzeit-Kontextes an das Betriebssystem des Knotens ermöglicht eine hohe Datenübertragungsrate bei gleichzeitiger einfacher Implementierung des Empfangsvorgangs.

Gemäß einer weiteren bevorzugten Ausführungsform wird ein paralleles Senden, Empfangen und Verarbeiten der Daten für Echtzeitanwendungen und der Daten für Nicht-Echtzeitanwendungen durchgeführt, wobei zum Verarbeiten der Daten in einem ersten Schritt die in einem vorangegangenen Empfangszyklus empfangenen Daten ausgewertet werden, in einem zweiten Schritt die Echtzeitanwendungen mit den ermittelten echtzeitrelevanten Daten ausführt werden und in einem dritten Schritt die zu sendenden Echtzeitdaten dann übergeben werden. Diese Vorgehensweise ermöglicht eine hohe Übertragungsleistung bei vollständiger Echtzeitfähigkeit und gewährleistet somit eine Kommunikationsanforderung für eine schnelle Maschinensteuerung. Bevorzugt ist dabei, den Sende- und Empfangszyklus im Full-Duplex-Betrieb so auszulegen, dass die Zyklusdauer fest ist, der Sendezyklus gegenüber dem Empfangszyklus jedoch um eine konstante Zeitspanne verzögert ist, die die Zeitdauer des ersten und zweiten Verarbeitungsschrittes, bei dem die Daten ausgewertet und die Echtzeitanwendungen durchgeführt werden, entspricht. Diese Vorgehensweise sorgt für einen einfachen und schnellen Full-Duplex-Betrieb mit reibungsloser Echtzeitkommunikation.

Die Erfindung wird anhand der beigefügten Zeichnungen näher erläutert. Es zeigen:
Fig. 1 mögliche Netzwerk-Topologien für ein lokales Kommunikationsnetz;
Fig. 2 einen möglichen Anschluss eines Knoten an ein Netzwerk im Ethernet;
Fig. 3 eine herkömmliche Auslegung eines Netzsystems mit einem getrennten Ethernet-Controller für Nicht-Echtzeitanwendung und einem Feldbussystem für Echtzeitanwendungen;
Fig. 4 einen erfindungsgemäßen Treiber zur parallelen Ausführung von Echtzeitanwendungen und Nicht-Echtzeitanwendungen auf einem Ethernet-Controller;
Fig. 5 einen erfindungsgemäßen Sendevorgang von Echtzeit- und Nicht-Echtzeit-Datenpaketen; und
Fig. 6 einen erfindungsgemäßen Full-Duplex-Betrieb zum parallelen Versenden, Empfangen und Verarbeiten von Echtzeit-Datenpaketen und Nicht-Echtzeit-Datenpaketen.

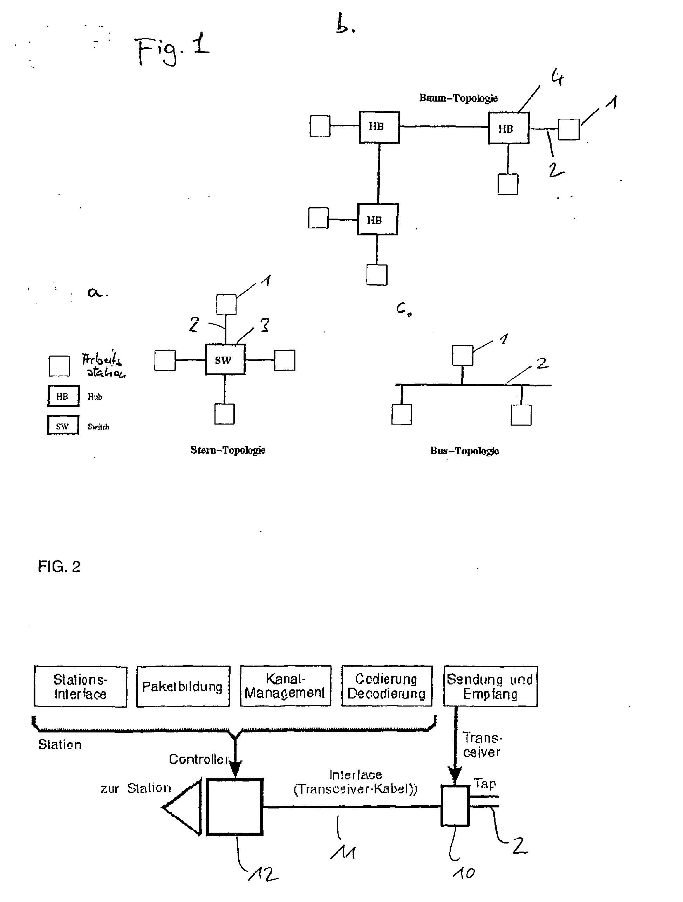

Mit einem Kommunikationsnetzwerk lassen sich auf einfache Weise Daten und Ressourcen zwischen Arbeitsstationen, im Allgemeinen Computer oder Maschinen, im weiteren auch Knoten genannt, austauschen und gemeinsam nutzen. Das Ethernet-Konzept ist dabei der am weitesten verbreitete Kommunikationsstandard in lokal begrenzten Kommunikationsnetzwerken (LAN). Das Ethernet basiert dabei auf einem LAN-Aufbau, dem eine Mehrzahl von Knoten über ein gemeinsames Übertragungsmedium miteinander verbunden sind, wobei das Ethernet-Konzept die Verkapslung der zu übermittelnden Daten in sog. Datenpaketen, im weiteren auch als Telegramm bezeichnet, mit vorbestimmtem Format vornimmt. Das Ethernet besteht aus drei Bereichen, nämlich, dem Übertragungsmedium und den Netzwerkschnittstellen, also der Hardware, der Menge von Protokollen, die den Zugriff auf ein Übertragungsmedium steuern und der Ethernet-Paketformat. Das Ethernet stellt grundsätzlich ein Busnetz dar, wobei beliebigen Netztopologien, wie sie in Figur 1 gezeigt sind, genutzt werden können.

Figur 1a zeigt eine weitere mögliche Netztopologie für ein Ethernet. Hier sind die Knoten 1 sternförmig über Punkt-zu-Punkt-Verbindungen 2 mit einer zentralen Vermittlungsstelle 3, einem sog. Switcher, verbunden. Figur 1b stellt als mögliche Netztopologie ein Bussystem dar. Hier sind alle Knoten 1 über eine Übertragungsleitung 2 miteinander verbunden. In Figur 1c eine weitere Ethernet-Netztopologie in Form eines Baumnetzes dar, das eine Kombination der vorstehenden Netzsysteme ist, die mittels zwischengeschalteten Vermittlungsstationen 4, sog. Hubs, verbunden sind.

Figur 2 zeigt einen möglichen Anschluss eines Knotens 1 in einer Netzwerktopologie mit Punkt zu Punkt-Verbindungen. Beim Ethernet erfolgt der Zugriff auf das Übertragungsmedium 2 im Allgemeinen über eine Kopplereinheit 10, einen sog. Transceiver, der in der Regel direkt auf einer Netzwerkadapterkarte zusammen mit einen Ethernet-Controller 12 angeordnet ist. Der Ethernet-Koppler 10 ist dabei über ein Interface 11 und dem Ethernet-Controller 12 verbunden. Alternativ kann der Ethernet-Koppler auch in den Ethernet-Controller integriert sein. Der Ethernet-Controller nimmt die Kodierung der zu sendenden Daten und die Dekodierung der empfangenen Daten vor. Weiterhin werden durch den Ethernet-Controller 12 auch alle zum Betrieb des Ethernet notwendigen Steuermaßnahmen verwaltet, d.h., der Ethernet-Controller führt das Management und die Paketbildung durch Verkapselung der Daten durch. Neben diesem Link-Management dient der Ethernet-Controller 12 auch als Schnittstelle zur Datenstation, dem Knoten, in dem die Daten dann weiterverarbeitet werden.

Die Ethernet-Datenübertragung findet dabei üblicherweise mithilfe eines Netzwerk-Protokolls so statt, dass eine Datenübertragung nur durchgeführt wird, wenn das Netz ruhig ist. Darüber hinaus ist zusätzlich eine Kollisionsverhinderungsmechanismus vorgesehen. Ein Ethernet-Datenpaket kann ca. 1.500 Bytes enthalten, wobei die Daten mittels Header- und Trailer-Informationen, die die Anfangskennzeichnung, die Ziel- und Quelladresse, den Datenpakettyp und den Fehlererkennungsmechanismus angeben, verkapselt sind.

Die Betriebssysteme der an der Netzkommunikation beteiligten Knoten weisen in der Regel eine geschichtete Softwarestruktur auf, um eine protokollspezifische Bearbeitung von einer telegramm- und hardwarespezifische Bearbeitung zu trennen. Dadurch ist es möglich, unterschiedliche Kommunikationsprotokolle beim Ethernetstandard einzusetzen, ohne jeweils am hardwarespezifischen Treiber Änderungen durchführen zu müssen. Gleichzeitig besteht aber auch die Möglichkeit, im Rahmen des Ethernetstandards die Hardware zu ändern, ohne protokollspezifische Softwareänderungen ausführen zu müssen. Das eingesetzte Kommunikationsprotokoll kann bestimmen, an welchen Ethernet-Controller ein Ethernet-Telegramm übergeben wird. Die vom Ethernet-Controller empfangene Telegramme werden wiederum allen Protokollen des Betriebssystems im Knoten zur Verfügung gestellt, wobei die Protokolle entscheiden, ob sie das Telegramm dann bearbeiten.

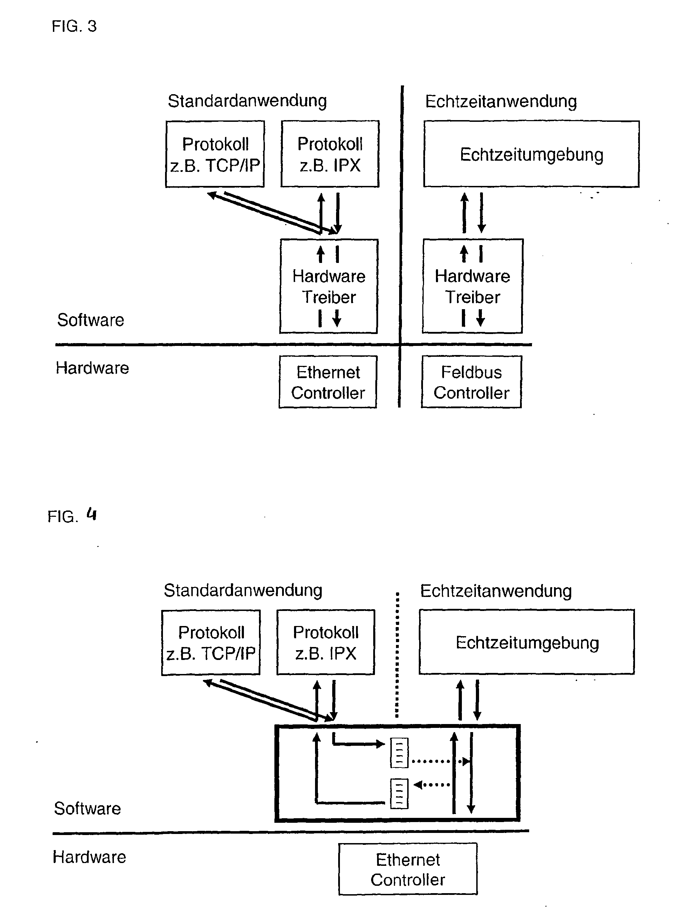

Das Ethernet hat sich vor allem als Kommunikationsstandard für Netzwerksysteme in der Bürokommunikation durchgesetzt, da Standard-Hardwarekomponenten und Standard-Softwareprotokolle genutzt werden können und hohe Datenübertragungsraten möglich sind. Aus diesem Grund ist es auch wünschenswert, den Ethernetstandard in industrieller Umgebung nutzen zu können. Das wesentliche Problem besteht hierbei in der mangelnden Echtzeitfähigkeit, so dass bei Automatisierungsaufgaben, wie in Figur 3 gezeigt, herkömmlicherweise die Netzwerksysteme zur Ausführung von nicht zeitkritischen Kommunikationsaufgaben und von Echtzeitanwendungen zur Maschinensteuerung getrennt sind. Für die Echtzeitanwendungen sind in der Regel Kommunikationsnetze mit eigenständigen Steuerungsbaugruppen, sog. Feldbus-Controllern, in der Arbeitsstation vorgesehen, um zeitkritische Steuerungsaufgaben durchführen zu können. Mit solchen Feldbussystemen für Echtzeitanwendungen lassen sich herkömmlicherweise Zykluszeiten zur Maschinensteuerung von 50 µs bei zulässigen Jitterzeiten, d.h. Abweichungen von der gewünschten Zykluszeit um 10 µs erreichen.

Um lokale Kommunikationsnetze für nicht-zeitkritische Standardanwendungen, insbesondere nach dem Ethernetstandard, auch als echtzeitfähiges Datenübertragungsnetz zur Ausführung von Steuerungsaufgaben nutzen zu können, wird, wie in Figur 4 dargestellt, der hardware- und/oder softwarespezifische Treiber herkömmlicher Ethernet-Controller durch einen erfindungsgemäßen und für den Echtzeitbetrieb erweiterten EthernetTreiber ersetzt. Dieser erfindungsgemäßen Ethernet-Controller ermöglicht die parallele Nutzung des Kommunikationsnetzes zur Übermittlung von Daten für Echtzeitanwendungen und von Daten für Nicht-Echtzeitanwendungen. Die Datenübermittlung wird dabei zyklisch und deterministisch ausgeführt, wobei die Daten für Echtzeitanwendungen priorisiert behandelt werden, so dass in einem Übermittlungszyklus zuerst alle Echtzeitdaten übergeben werden und in der Zeit, die noch bis zum nächsten Übermittlungszyklus bleibt, dann die Daten für Nicht-Echtzeitanwendung. Alle in Form von Telegrammen zusammengefassten Daten für Nicht-Echtzeitanwendungen, insbesondere die von dem Betriebssystems des dem Ethernet-Controller zugeordneten Knotens erzeugten Telegramme, werden als nieder priorisiert behandelt und sind dem Echtzeitsystem untergeordnet. Der erfindungsgemäße Ethernet-Controller kommuniziert mit dem Echtzeitsystem und ist verantwortlich für das echtzeitfähige Senden und Empfangen der Ethernettelegramme. Um den parallelen Betrieb von Standardanwendungen zu ermöglichen, meldet sich der erfindungsgemäße Ethernet-Controller zusätzlich beim Betriebssystem des Knotens als Standard-Ethernettreiber an, dem alle Kommunikationsprotokolle des Betriebssystems prinzipiell zur Verfügung stehen. Alle Daten des Betriebssystems werden von erfindungsgemäßen Ethernet-Controller nachrangig behandelt und erst nach einer Kontrolle durch das Echtzeitsystem versandt. Alle empfangenen Datentelegramme werden durch das Echtzeitsystem begutachtet und dann gffs. an das Betriebssystem weitergereicht.

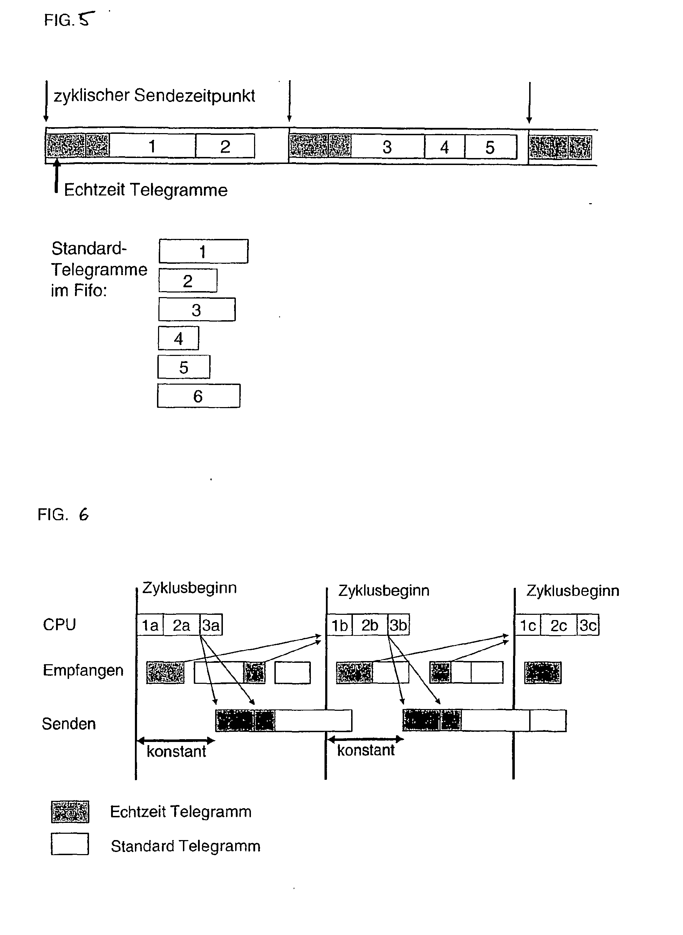

Der erfindungsgemäße Ethernet-Controller befindet sich also vollständig unter Kontrolle des Echtzeitsystems, so dass nicht echtzeitfähige Zugriffe verhindert bzw. in echtzeitunkritische Bereiche verlagert werden. Das priorisierte Versenden von Echtzeit- und Standardtelegrammen erfolgt dabei in der in Figur 5 gezeigten Weise. Beim Sendevorgang wird in einem Sendezyklus mithilfe des erfindungsgemäßen Ethernet-Controllers sichergestellt, dass die Daten für die Echtzeitanwendung vollständig gesendet und dann erst die Daten für die Nicht-Echtzeitanwendung übermittelt werden. Durch den zyklisch und deterministisch ausgeführten Sendevorgang wird gewährleistet, dass zu versendende Echtzeittelegramme ohne Verzögerung gesendet werden. Gleichzeitig wird die Länge der zu versendenden Echtzeittelegramme aufaddiert, um die Sendedauer bei bekannter Datenrate festzustellen. Nachdem alle Echtzeittelegramme versendet sind, wird die Zeit berechnet, die noch bis zum nächsten Sendezyklus verbleibt. In dieser verbleibenden Zeit werden dann die vorhandenen Telegramme mit Nicht-Echtzeitanwendungen, die vom Betriebssystem verschickt werden sollen und vom Treiber des Ethernet-Controllers in einem Puffer, vorzugsweise einem Fifo, abgelegt sind, verschickt. Dabei wird wiederum die benötigte Sendedauer zum Versenden dieser Datentelegramme mit Nicht-Echtzeitanwendungen berücksichtigt. Kann ein Telegramm mit Nicht-Echtzeitdaten nicht mehr in der noch zur Verfügung stehenden Zeit bis zum nächsten Sendezyklus versandt werden, so verbleibt es im Fifo-Speicher und wird erst nach dem Versenden der Echtzeittelegramme im nächsten Sendezyklus versandt.

Beim Empfangsvorgang werden mithilfe des erfindungsgemäßen Ethernet-Controllers die in einem Empfangszyklus empfangenen Daten ausgewertet, um zu bestimmen, welche der empfangenen Daten Daten für Echtzeitanwendungen und welche der empfangenen Daten Daten für Nicht-Echtzeitanwendungen sind, wobei die empfangenen Daten für Echtzeitanwendungen dann zu Beginn der nächsten Echtzeit bearbeitet werden. Die Daten für Nicht-Echtzeitanwendungen werden dagegen in einem von der Echtzeitanwendung unabhängigen Vorgang bearbeitet.

Die bevorzugte Vorgehensweise ist hierbei, dass die empfangenen Ethernettelegramme in ihrer Empfangsreihenfolge vom erfindungsgemäßen Ethernet-Controller vorzugsweise im Speicher des Knotens abgelegt werden. Der Ethernet-Controller ist dabei so eingestellt, dass er keine Interrupts beim Empfang auslöst, so dass alle empfangene Telegramme erst am Anfang des nächsten Echtzeitzyklus bearbeitet werden. Dabei geht dann das Echtzeitsystem alle empfangenen Telegramme durch und wertet die für das Echtzeitsystem relevanten Telegramme aus. Alle empfangenen echtzeitrelevanten Daten stehen somit zu Beginn des Echtzeitzyklus zur Verfügung. Alle Telegramme mit nicht-echtzeitrelevanten Daten werden dagegen als gelesen markiert und außerhalb des Echtzeit-Kontextes an das Betriebssystem übergeben. In einem von der Echtzeitanwendung unabhängigen Prozess kann dann die Liste der empfangenen markierten Telegramme vom Betriebssystem und dessen Protokollen bearbeitet werden. Die vom Echtzeitsystem bearbeitete Echtzeittelegramme werden dagegen in der Regel nicht an die Protokolle des Betriebssystems weitergegeben. Eine solche Weitergabe erfolgt nur zu Debug-Zwecken, um ggfs. Fehler bei der Echtzeitanwendung festzustellen.

Bevorzugt ist weiterhin ein Etherneteinsatz für Echtzeit- und Nicht-Echtzeitanwendungen im Full-Duplex-Betrieb, d.h. die Möglichkeit, ein paralleles Senden, Empfangen und Verarbeiten von Daten für Echtzeitanwendungen und für Nicht-Echtzeitanwendungen durchzuführen. Ein erfindungsgemäßer Full-Duplex-Betrieb ist in Figur 6 gezeigt. Es sind dabei mehrere aufeinanderfolgende Echtzeitzyklen dargestellt, wobei jeweils der Zeitablauf der Verarbeitung durch die zentrale Verarbeitungseinheit (CPU) im Knoten sowie der Ablauf der Sende- und Empfangsvorgänge von Echtzeittelegrammen und Standardtelegrammen mit Nicht-Echtzeitdaten dargestellt ist. Im Schritt 1 werden jeweils von der zentralen Verarbeitungseinheit zu Beginn eines Echtzeitzyklus die empfangenen Telegramme vom vorhergehenden Übermittlungszyklus ausgewertet. Im Schritt 2 wird dann auf der Grundlage der ausgewerteten Echtzeitdaten die eigentliche Automatisierungsaufgabe in Echtzeit durchgeführt. Anschließend wird von der zentralen Verarbeitungseinheit im Schritt 3 die zu versendenden Echtzeittelegramme an den Ethernet-Controller übergeben. Hierbei werden dann immer zuerst sofort die echtzeitrelevanten Telegramme übermittelt und dann - falls vorhanden und ausreichende Zeit verbleibt - die Telegramme mit nicht-echtzeit relevanten Daten des Betriebssystems. Der Sendevorgang ist dabei, bezogen auf den Beginn eines Echtzeitzyklus, um eine feste Zeitspanne verzögert, die der Zeitdauer für den ersten und zweiten Bearbeitungsschritt der CPU entspricht. Der Empfangsvorgang dagegen wird vorzugsweise gleichzeitig oder kurz nach dem Beginn des Echtzeitzyklus gestartet.

Durch die erfindungsgemäße Erweiterung des Ethernetkonzepts ist es möglich, eine parallele Nutzung von lokalen Netzwerken für Standardanwendungen und Echtzeitanwendungen vorzunehmen.

## Patentansprüche

1. Verfahren zum Übermitteln von Daten für Echtzeitanwendungen und Nicht-Echtzeitanwendungen auf einem Kommunikationsnetzwerk mit mehreren Knoten (1), die über einen Kommunikationsweg (2) miteinander verbunden sind,
wobei die Datenübermittlung über die Schnittstelleneinheit (10, 11, 12) zyklisch und deterministisch erfolgt und die Daten für Echtzeitanwendungen priorisiert behandelt werden, so dass bei einem Sendevorgang zuerst alle Daten für Echtzeitanwendungen übergeben werden und in der Zeit, die noch bis zum Start des nächsten Sendevorgang verbleibt, dann die Daten für Nicht-Echtzeitanwendungen übergeben werden, **dadurch gekennzeichnet daß** die Datenübermittlung zwischen den Knoten (1) und dem Kommunikationsweg (2) jeweils über eine Schnittstelleneinheit (10, 11, 12) erfolgt, der mit einem Echtzeitsystem des Knoten für die Echtzeitanwendungen und einem Betriebssystem des Knoten für die Nicht-Echtzeitanwendungen kommuniziert,
wobei in einem Echtzeitzyklus ein paralleles Senden, Empfangen und Verarbeiten von Daten für Echtzeitanwendungen und von Daten für Nicht-Echtzeitanwendungen durchgeführt wird,
wobei in einem Echtzeitzyklus zum Verarbeiten der Daten in einem ersten Verarbeitungsschritt die in einem vorangegangenen Echtzeitzyklus von der Schnittstelleneinheit (10, 11, 12) empfangenen Daten vom Echtzeitsystem des Knotens ausgewertet werden, um zu bestimmen, welche der empfangenen Daten Daten für Echtzeitanwendungen und welche der empfangenen Daten, Daten für Nicht-Echtzeitanwendungen sind, wobei die Daten für Nicht-Echtzeitanwendungen an das Betriebssystem des Knotens (1) weitergegeben werden,
in einem zweiten Verarbeitungsschritt die Echtzeitanwendungen vom Echtzeitsystem ausgeführt werden, und
in einem dritten Verarbeitungsschritt die vom Echtzeitsystem übergebenen, zu sendenden Daten für Echtzeitanwendungen von der Schnittstelleneinheit (10, 11, 12) in einem Sendevorgang versandt werden.

2. Verfahren nach Anspruch 1, wobei beim Sendevorgang die Daten für Echtzeitanwendungen vollständig gesendet werden und die Zeit berechnet wird, die noch bis zum Start des nächsten Sendevorgangs verbleibt, um dann in der verbleibenden Zeit Daten für Nicht-Echtzeitanwendungen zu senden.

3. Verfahren nach Anspruch 2, wobei die Daten in Form von Datenpaketen übermittelt werden und dann, wenn die nach dem Senden der Daten für Echtzeitanwendungen verbleibende Zeit die zum Versenden eines Datenpakets für Nicht-Echtzeitanwendungen benötigte Sendedauer übersteigt, das Datenpaket zwischengespeichert und vorzugsweise beim nächsten Sendevorgang versandt wird.

4. Verfahren nach einem der Ansprüche 1 bis 3, wobei die empfangenen Daten für Nicht-Echtzeitanwendungen in einem von der Echtzeitanwendung unabhängigen Vorgang bearbeitet werden.

5. Verfahren nach einem der Ansprüche 1 bis 4, wobei der Sendevorgang gegenüber dem Beginn des Echtzeitzyklus um eine konstante Zeitspanne verzögert ist, die der Zeitdauer für den ersten und zweiten Verarbeitungsschritt einspricht.

6. Verfahren nach einem der Ansprüche 1 bis 5, wobei die der Empfangsvorgang gleichzeitig oder kurz nach dem Beginn des Echtzeitzyklus gestartet wird.

7. Knoten (1) mit einer Schnittstelleneinheit (10, 11, 12) zur Anbindung des Knotens an ein Kommunikationsnetzwerk mit mehreren Knoten, die über einen Kommunikationsweg (2) miteinander verbunden sind, und mit einer Verarbeitungseinheit (CPU), die einem Echtzeitsystem für die Echtzeitanwendungen und einem Betriebssystem für die Nicht-Echtzeitanwendungen ausgestattet ist, wobei die Schnittstelleneinheit (10, 11, 12) zur zyklischen und deterministischen Übermittlung von Daten zwischen dem Knoten (1) und dem Kommunikationsweg (2) ausgelegt ist, um Daten für Echtzeitanwendungen gegenüber Daten von Nicht-Echtzeitanwendungen priorisiert zu behandeln, so dass bei einem Sendevorgang zuerst alle Daten für Echtzeitanwendungen übergeben werden und in der Zeit, die noch bis zum Beginn des nächsten Sendevorgangs verbleibt, dann die Daten für Nicht-Echtzeitanwendungen übergeben werden,
wobei der Knoten (1) ausgelegt ist, in einem Echtzeitzyklus ein paralleles Senden, Empfangen und Verarbeiten von Daten für Echtzeitanwendungen und von Daten für Nicht-Echtzeitanwendungen durchzuführen,
wobei das Echtzeitsystem auf der Verarbeitungseinheit (CPU) in einem Echtzeitzyklus in einem ersten Verarbeitungsschritt die in einem vorangegangenen Echtzeitzyklus von der Schnittstelleneinheit (10, 11, 12) empfangenen Daten auswertet, um zu bestimmen, welche der empfangenen Daten Daten für Echtzeitanwendungen und welche der empfangenen Daten, Daten für Nicht-Echtzeitanwendungen sind, wobei die Daten für Nicht-Echtzeitanwendungen an das Betriebssystem auf der Verarbeitungseinheit (CPU) weitergegeben werden,
in einem zweiten Verarbeitungsschritt das Echtzeitsystem auf der Verarbeitungseinheit (CPU) die Echtzeitanwendungen ausführt, und
in einem dritten Verarbeitungsschritt die Schnittstelleneinheit (10, 11, 12) die vom Echtzeitsystem auf der Verarbeitungseinheit (CPU) übergebenen ,zusendenden Daten für Echtzeitanwendungen versendet.

8. Knoten (1) nach Anspruch 7, wobei die Schnittstelleneinheit (10, 11, 12) bei einem Sendevorgang die Daten für Echtzeitanwendungen vollständig versendet und die Zeit berechnet, die noch bis zum nächsten Sendezyklus verbleibt, um dann in der verbleibenden Zeit Daten für Nicht-Echtzeitanwendungen zu versenden.

9. Knoten (1) nach Anspruch 8, wobei die Daten in Form von Datenpaketen übermittelt werden und in der Schnittstelleneinheit (10, 11, 12) ein Zwischenspeicher vorgesehen ist, um dann, wenn die nach dem Senden der Daten für Echtzeitanwendungen verbleibende Zeit, die zum Versenden eines Datenpakets für Nicht-Echtzeitanwendungen benötigte Sendedauer übersteigt, das Datenpaket zwischenzuspeichern und vorzugsweise im Rahmen des nächsten Sendevorgangs zu versenden.

10. Knoten (1) nach Anspruch 9, wobei die empfangenen Daten für Echtzeitanwendungen und die empfangenen Daten für Nicht-Echtzeitanwendungen unabhängig voneinander bearbeitet werden.

## Claims

1. Method for transmitting data for real-time applications and non real-time applications on a communications network with multiple nodes (1), which are connected to one another over a communication path (2), the data transmission taking place cyclically and deterministically via the interface unit (10, 11, 12) and the data for real-time applications being handled preferentially, so that in a transmission operation first all data for real-time applications is transferred and, in the time remaining until the start of the next transmission operation, the data for non real-time applications is then transferred, **characterized in that** the data transmission between the nodes (1) and the communication path (2) takes place in each case via an interface unit (10, 11, 12), which communicates with a real-time system of the node for the real-time applications and an operating system of the node for the non real-time applications,
a parallel transmission, receipt and processing of data for real-time applications and of data for non real-time applications being executed in a real-time cycle, for the processing of the data in a first processing step the data received from the interface unit (10, 11, 12) in a preceding real-time cycle being evaluated by the real-time system of the node in a real-time cycle, in order to determine which of the received data is data for real-time applications and which of the received data is data for non real-time applications, the data for non real-time applications being passed to the operating system of the node (1), the real-time applications being executed by the real-time system in a second processing step, and
in a third processing step the data passed for transmission for real-time applications by the real-time system being sent by the interface unit (10, 11, 12) in a transmission operation.

2. Method according to Claim 1, the data for real-time applications being completely sent in the transmission operation and the time remaining until the start of the next transmission operation being calculated, in order then to send data for non real-time applications in the remaining time.

3. Method according to Claim 2, the data being transmitted in the form of data packets and then, if the time remaining after the sending of the data for real-time applications exceeds the transmission time needed for sending a data packet for non real-time applications, the data packet being temporarily stored and preferably sent with the next transmission operation.

4. Method according to one of the claims 1 to 3, the received data for non real-time applications being processed in an operation independent of the real-time application.

5. Method according to one of the claims 1 to 4, the transmission operation being delayed from the beginning of the real-time cycle by a constant interval, which corresponds to the period of time for the first and second processing step.

6. Method according to one of the claims 1 to 5, the receive operation being started at the same time as or shortly after the start of the real-time cycle.

7. Node (1) with an interface unit (10, 11, 12) for linking up the node to a communications network with multiple nodes, which are connected to one another over a communication path (2), and with a processing unit (CPU) which is equipped with a real-time system for the real-time applications and an operating system for the non real-time applications, the interface unit (10, 11, 12) being designed for cyclic and deterministic transmission of data between the node (1) and the communication path (2), in order to handle data for real-time applications with priority over data of non real-time applications, so that in a transmission operation first all data for real-time applications is transferred, and in the time remaining until the start of the next transmission operation, the data for non real-time applications is then transferred, the node (1) being designed to execute a parallel transmission, receipt and processing of data for real-time applications and of data for non real-time applications in a real-time cycle,
the real-time system on the processing unit (CPU) in a real-time cycle in a first processing step evaluating the data received in a preceding real-time cycle from the interface unit (10, 11, 12), in order to determine which of the received data is data for real-time applications and which of the received data is data for non real-time applications, the data for non real-time applications being passed to the operating system on the processing unit (CPU),
the real-time system on the processing unit (CPU) executing the real-time applications in a second processing step, and
in a third processing step the interface unit (10, 11, 12) sending the data passed for transmission for real-time applications from the real-time system on the processing unit (CPU).

8. Node (1) according to Claim 7, the interface unit (10, 11, 12) completely sending the data for real-time applications in a transmission operation and calculating the time remaining until the next send transmission cycle, in order then to send data for non real-time applications in the remaining time.

9. Node (1) according to Claim 8, the data being transmitted in the form of data packets and temporary storage being provided in the interface unit (10, 11, 12) in order, if the time remaining after the sending of the data for real-time applications exceeds the transmission time needed for sending a data packet for non real-time applications, to store the data packet temporarily, and preferably send it within the next transmission operation.

10. Node (1) according to Claim 9, the received data for real-time applications and the received data for non real-time applications being processed independently of each other.

## Revendications

1. Procédé de transmission de données pour des applications en temps réel et des applications non en temps réel sur un réseau de communication avec plusieurs noeuds (1) qui sont reliés ensemble via un chemin de communication (2),
la transmission des données via l'unité d'interface (10, 11, 12) s'effectuant de manière cyclique et déterministe et les données pour les applications en temps réel étant traitées de manière prioritaire de sorte que lors d'une procédure d'émission, toutes les données pour les applications en temps réel sont transmises les premières et qu'ensuite les données pour les applications non en temps réel sont transmises dans le temps restant encore jusqu'au démarrage de la procédure d'émission suivante, **caractérisé en ce que** la transmission des données entre le noeud (1) et le chemin de communication (2) s'effectue toujours via une unité d'interface (10, 11, 12) qui communique avec un système en temps réel du noeud pour les applications en temps réel et avec un système d'exploitation du noeud (1) pour les applications non en temps réel,
l'émission, la réception et le traitement des données pour les applications en temps réel et des données pour les applications non en temps réel étant exécutés en parallèle au cours d'un cycle de temps réel,
au cours d'un cycle de temps réel de traitement des données, les données reçues dans un cycle de temps réel précédent par l'unité d'interface (10, 11, 12) étant exploitées dans une première étape de traitement, par le système en temps réel du noeud, afin de déterminer quelles sont les données destinées à des applications en temps réel parmi les données reçues et quelles sont les données destinées à des applications non en temps réel parmi les données reçues, les données pour les applications non en temps réel étant transmises au système d'exploitation du noeud (1),
les applications en temps réel étant exécutées dans une deuxième étape de traitement, par le système en temps réel, et
les données destinées à l'envoi, transmises par le système d'exploitation pour les applications en temps réel étant envoyées dans une troisième étape de traitement, par l'unité d'interface (10, 11, 12) dans une procédure d'émission.

2. Procédé selon la revendication 1, les données pour les applications en temps réel étant intégralement envoyées lors de la procédure d'émission et le temps restant encore jusqu'à la procédure d'émission suivante étant calculé pour envoyer ensuite dans le temps restant, les données pour les applications non en temps réel.

3. Procédé selon la revendication 2, les données étant transmises sous la forme de paquets de données et ensuite, lorsque le temps restant encore après envoi des données pour les applications en temps réel dépasse la durée d'émission nécessaire pour l'envoi d'un paquet de données pour les applications non en temps réel, le paquet de données étant enregistré temporairement et de préférence envoyé lors de la procédure d'émission suivante.

4. Procédé selon l'une quelconque des revendications 1 à 3, les données reçues pour des applications non en temps réel étant traitées au cours d'une procédure indépendante de l'application en temps réel.

5. Procédé selon l'une quelconque des revendications 1 à 4, la procédure d'émission étant retardée par rapport au début du cycle de temps réel, d'une constante de temps qui correspond à la durée de la première et de la deuxième étape de traitement.

6. Procédé selon l'une quelconque des revendications 1 à 5, la procédure de réception étant lancée immédiatement ou légèrement après le début du cycle de temps réel.

7. Noeud (1) avec une unité d'interface (10, 11, 12) pour la connexion du noeud à un réseau de communication avec plusieurs noeuds qui sont reliés ensemble via un chemin de communication (2) et avec une unité de traitement (CPU) qui est dotée d'un système en temps réel pour les applications en temps réel et d'un système d'exploitation pour les applications non en temps réel, l'unité d'interface (10, 11, 12) étant conçue pour la transmission cyclique et déterministe de données entre le noeud (1) et le chemin de communication (2), pour traiter de manière prioritaire les données pour les applications en temps réel par rapport aux données pour les applications non en temps réel, de sorte que lors d'une procédure d'émission, toutes les données pour les applications en temps réel sont transmises les premières et qu'ensuite les données pour les applications non en temps réel sont transmises dans le temps restant encore jusqu'au démarrage de la procédure d'émission suivante,
le noeud (1) étant conçu pour effectuer en parallèle au cours d'un cycle de temps réel, l'émission, la réception et le traitement des données pour les applications en temps réel et des données pour les applications non en temps réel,
le système en temps réel sur l'unité de traitement (CPU) exploitant dans une première étape de traitement, les données reçues dans un cycle de temps réel précédent par l'unité d'interface (10, 11, 12), afin de déterminer quelles sont les données destinées à des applications en temps réel parmi les données reçues et quelles sont les données destinées à des applications non en temps réel parmi les données reçues, les données pour les applications non en temps réel étant transmises au système d'exploitation sur l'unité de traitement (CPU),
dans une deuxième étape de traitement, le système en temps réel exécutant les applications en temps réel sur l'unité de traitement (CPU), et
dans une troisième étape de traitement, l'unité d'interface (10, 11, 12) envoyant les données pour les applications en temps réel destinées à l'envoi, transmises par le système d'exploitation à l'unité de traitement (CPU).

8. Noeud (1) selon la revendication 7, l'unité d'interface (10, 11, 12) envoyant intégralement les données pour les applications en temps réel lors d'une procédure d'émission et calculant le temps restant encore jusqu'à la procédure d'émission suivante pour émettre ensuite dans le temps restant, les données pour les applications non en temps réel.

9. Noeud (1) selon la revendication 8, les données étant transmises sous la forme de paquets de données et une mémoire tampon étant prévue dans l'unité d'interface (10, 11, 12) pour enregistrer temporairement le paquet de données et l'envoyer de préférence dans le cadre de la procédure d'émission suivante, lorsque le temps restant encore après envoi des données pour les applications en temps réel dépasse la durée d'émission nécessaire pour l'envoi d'un paquet de données pour les applications non en temps réel.

10. Noeud (1) selon la revendication 9, les données reçues pour des applications en temps réel et les données reçues pour des applications non en temps réel étant traitées indépendamment les unes des autres.
